# EUROPEAN PATENT SPECIFICATION

(11) **EP 2 258 076 B1**
(45) Date of publication and mention of the grant of the patent: **11.01.2012**
(21) Application number: 08735471.8
(22) Date of filing: 25.03.2008
(51) Int. Cl.: H04L 12/24

(54) **POLICY AND CHARGING CONTROL ARCHITECTURE**
RICHTLINIEN- UND VERGEBÜHRUNGSSTEUERARCHITEKTUR
ARCHITECTURE DE COMMANDE DE RÈGLES DE CONDUITE ET DE FACTURATION

(43) Date of publication of application: 08.12.2010
(73) Proprietor: Telefonaktiebolaget L M Ericsson (publ), 164 83 Stockholm (SE)
(72) Inventor: CASTELLANOS ZAMORA, David, E-28045 Madrid (ES); PRZYBYSZ, Hubert, S-126 37 Hägersten (SE)
(74) Representative: Lind, Robert
(86) International application number: PCT/EP2008/053509
(87) International publication number: WO 2009/118038

(56) References cited:
- 3RD GENERATION PARTNERSHIP PROJECT: "Technical Specification Group Core Network and Terminals; Policy and Charging Control over Gx reference point (Release 7)" 3RD GENERATION PARTNERSHIP PROJECT, [Online] 1 March 2008 (2008-03-01), - 1 March 2008 (2008-03-01) pages 1-46, XP002526081 Retrieved from the Internet: URL:http://www.3gpp.org/ftp/Specs/archive/ 29_series/29.212/> [retrieved on 2009-04-29]
- 3RD GENERATION PARTNERSHIP PROJECT: "Technical Specification Group Services and System Aspects; Policy and charging control architecture (Release 7)" 3RD GENERATION PARTNERSHIP PROJECT, [Online] 1 December 2007 (2007-12-01), - 1 December 2007 (2007-12-01) pages 1-72, XP002526082 Retrieved from the Internet: URL:http://www.3gpp.org/ftp/Specs/html-inf o/23203.htm> [retrieved on 2009-04-29]

## Description

### Technical Field

The present invention relates to a policy and charging control architecture and more particularly to such an architecture for use with the IP Multimedia Subsystem.

### Background

IP Multimedia services provide a dynamic combination of voice, video, messaging, data, etc. within the same session. By growing the number of basic applications and the media which it is possible to combine, the number of services offered to the end subscribers will grow, and the inter-personal communication experience will be enriched. This will lead to a new generation of personalised, rich multimedia communication services, including so-called "combinational IP Multimedia" services.

IP Multimedia Subsystem (IMS) is the technology defined by the Third Generation Partnership Project (3GPP) and ETSI TISPAN group to provide IP Multimedia services over mobile communication networks (3GPP TS 22.228, TS 23.228, TS 24.229, TS 29.228, TS 29.229, TS 29.328 and TS 29.329 Releases 5 to 7, and TS 224.173 Release 7). IMS provides key features to enrich the end-subscriber person-to-person communication experience through the use of standardised IMS Service Enablers, which facilitate new rich person-to-person (client-to-client) communication services as well as person-to-content (client-to-server) services over IP-based networks. The IMS makes use of the Session Initiation Protocol (SIP) to set up and control calls or sessions between subscriber terminals (or subscriber terminals and application servers). The Session Description Protocol (SDP), carried by SIP signalling, is used to describe and negotiate the media components of the session. Whilst SIP was created as a subscriber-to-subscriber protocol, IMS allows operators and service providers to control subscriber access to services and to charge subscribers accordingly.

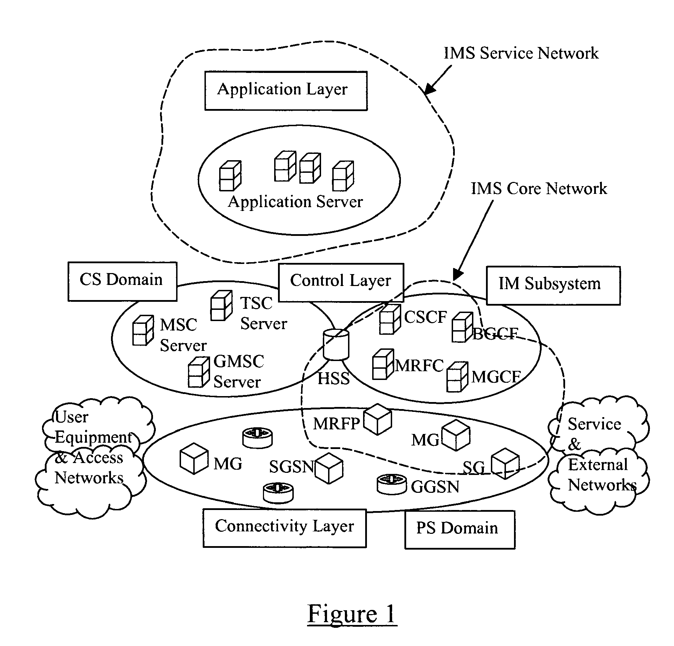

By way of example, Figure 1 illustrates schematically how the IMS fits into the mobile network architecture in the case of a GPRS/PS access network (IMS can of course operate over other IP access networks, known generically as IP Connectivity Access Networks or IP-CANs). Call/Session Control Functions (CSCFs) operate as SIP proxies within the IMS. The 3GPP architecture defines three types of CSCFs: the Proxy CSCF (P-CSCF) which is the first point of contact within the IMS for a SIP terminal; the Serving CSCF (S-CSCF) which provides services to the subscriber and which the subscriber is subscribed to; and the Interrogating CSCF (I-CSCF) whose role is to identify the correct S-CSCF and to forward to that S-CSCF a request received from a SIP terminal via a P-CSCF.

The IMS architecture offers the opportunity to deploy peer-to-peer applications where two or more users exchange user data directly, following SIP session establishment via IMS. Examples of peer-to-peer applications are Multimedia Telephony (MMTel), Push to Talk over Cellular (PoC), streaming, real-time video sharing, file sharing, gaming etc. The transport connection(s) is(are) negotiated dynamically by means of the SIP/SDP protocol exchange between the two end points.

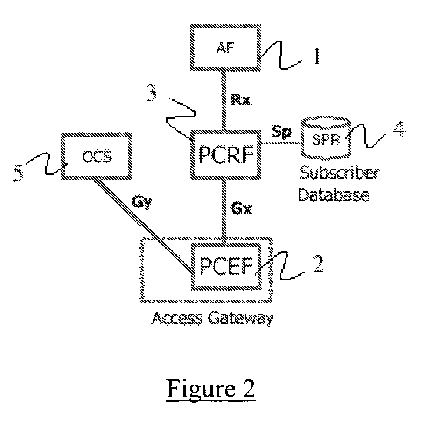

In order to support peer-to-peer IMS applications, a mechanism is needed to selectively control the IP flows (QoS, Firewalling, multiplexing etc.) associated with an IMS session of a subscriber whilst at the same time allowing the application of appropriate charging schemes. 3GPP has identified such needs and it is currently defining a Policy and Charging Control (PCC) Architecture, TS 23.203. Figure 2 presents a basic outline of the PCC architecture.

Within the PCC architecture, an Application Function (AF) 1 is an element implementing applications that require dynamic policy and/or charging control of traffic plane resources. In the case of the IMS, the P-CSCF plays the role of AF in the SIP signaling plane. The Policy and Charging Enforcement Function (PCEF) 2 provides service data flow detection, charging, and policy enforcement of the user plane traffic. Within a General Packet Radio Service (GPRS) access network, the PCEF is located within a GPRS Gateway Support Node (GGSN). The PCRF is a separate logical node and sits in between of the Application layer (e.g. IMS), where services are initiated and service characteristics are negotiated, and the user plane where the actual service is being provided. The Policy and Charging Rules Function (PCRF) 3 provides policy and flow-based charging control functions, using subscriber data stored in a Subscription Profile Repository (SPR) 4. The PCRF receives Service Information (e.g. application identifier, type of media, bandwidth, IP address and port number) from the AF over the Rx interface, and uses this to install PCC rules into the PCEF which in turn ensures that only authorized media flows associated with the requested services are allowed, and that the correct bandwidth, charging and priority are applied. The PCEF provides real-time charging information to an Online Charging System (OCS) 5.

The AF may modify Session Information at any time, for example due to an AF session modification or internal AF trigger. Modification is achieved by the AF sending an AA-Request command to the PCRF over the Rx reference point ("reference point" is a term used in 3GPP to identify an information flow between logical functions) containing the Media-Component-Description Attribute-Value Pairs (AVPs), with the updated Service Information as defined in 3GPP TS 29.214. The PCRF processes the received Service Information according to the operator policy and may decide whether the request is accepted or not. If the request is accepted, the PCRF updates the pre-existing Service Information with the new information. The updated Service Information may require the PCRF to create, modify or delete the related PCC rules and provide the updated information towards the PCEF over the Gx reference point as specified in 3GPP TS 29.212. The procedures used to update the Authorized QoS for the affected IP-CAN bearer are also specified in 3GPP TS 29.212. Currently specified procedures for modification of the Service Information for PCC provide for the immediate activation, replacement and removal of filter description information at the PCEF.

### Summary

It is an object of the present invention to provide a method an apparatus for allowing the deferred removal of IP flow filters at a policy charging and enforcement function.

According to a first aspect of the present invention there is provided apparatus for generating policy and charging rules to control IP flows across a packet switched network. The apparatus comprises a first interface for coupling to an application function and a second interface for coupling to a policy and charging enforcement function implemented at a node through which said IP flows pass. A processor or processors are configured to receive service information at said first interface, and, via said second interface to trigger the removal of one or more pre-existing policy and charging rules at the policy and charging enforcement function following a predefined delay. The apparatus is characterised in that the processor or processors are further configured to receive at said first interface an explicit request to implement said delay

This apparatus may be embodied as a standalone logical entity, or may be colocated with some other network entity.

In one embodiment of the invention, said processor or processors is/are configured to initiate a timer upon receipt of said service information and, upon expiry of the timer, to send an instruction to said policy and charging enforcement function via said second interface to delete said pre-existing policy and charging rule(s).

Said processor or processors may be configured to send to said policy and charging enforcement function, via said second interface, an instruction to delete said pre-existing policy and charging rule(s) after a delay specified in the instruction.

Said processor or processors may be configured to receive, via said first interface, a delay value.

Said processor or processors may be configures to implement said delay based upon service description characteristics received over said first interface.

Said processor or processors may be configured to (a) install a new set of policy and charging rules into said policy and charging enforcement function in addition to a pre-existing set and (b), following said predefined delay, to remove said pre-existing set from said policy and charging enforcement function. Said processor or processors may be further configured to perform steps (a) and (b) in response to respective requests received from said application function.

According to a second aspect of the present invention there is provided apparatus for implementing an application function to establish and control IP flows across a packet switched network. The apparatus comprises an interface for coupling to a policy and charging rules function, and a processor or processors configured to determine service information relating to an IP flow or flows and to send said service information via said interface together with a request for delayed deletion of a policy and charging control rule or rules relating to said flow(s).

According to an embodiment of the second aspect of the invention, said processor or processors may be configured to send a delay value together with said service information and said explicit request.

Said processor or processors may be configured to include said service information and said explicit request, and optionally said delay value, within a Session Description Protocol offer. Said processor or processors may be configured to include said explicit request within said offer as an AVP.

The apparatus of the above second aspect of the invention may be configured to operate as a Proxy Call Session Control Function within an IP Multimedia Subsystem.

According to a third aspect of the present invention there is provided apparatus for implementing an application function to establish and control IP flows across a packet switched network. The apparatus comprises an interface for coupling to a policy and charging rules function, and a processor or processors configured to determine service information relating to an IP flow or flows and to send said service information via said interface together with a request to maintain an existing policy and charging control rule or rules relating to said flow(s), and, after a predefined delay, to send a further request to delete said existing policy and charging control rule or rules.

According to a fourth aspect of the present invention there is provided a method of controlling IP flows through a packet switched access network. The method comprises sending updated service information from an application function to a policy and charging rules function, together with an explicit request to implement removal of policy and charging rules after a delay. At the policy and charging rules function, a determination is made that a policy and charging rule or rules must be removed from a policy and charging enforcement function responsible for an IP flow or flows associated with the session. The policy and charging rule or rules are removed after a predefined delay.

According to one embodiment, following a determination that a policy and charging rule or rule must be removed from a policy and charging enforcement function, a timer is initiated at the policy and charging rules function and, upon expiry of said timer, an instruction sent to said policy and charging enforcement function to remove said policy and charging rule or rules.

Alternatively, following a determination that a policy and charging rule or rule must be removed from a policy and charging enforcement function, an instruction is sent to said policy and charging enforcement function to remove said policy and charging rule or rules after a predefined delay, a delay value being included with the instruction.

According to a still further alternative, a timer is initiated at said application function and, following expiry of said timer, further service information sent to said policy and charging rules function, receipt of the further service information resulting in the removal of said policy and charging rule or rules.

It will be understood that said policy and charging rules function is arranged to make separate determinations for rule(s) removal for uplink and downlink IP flows.

Reference above to service information means information including filter information, e.g. IP source and destination IP addresses and port numbers. The service information may additionally comprise an identification of required codecs, bandwidth, etc.

According to a fifth aspect of the present invention there is provided a method of controlling IP flows through a packet switched access network. The method comprises sending updated filter information from an application function to a policy and charging rules function together with a request to maintain existing filter information relating to said IP flows. At said policy and charging rules function, a new policy and charging rule(s) are determined using said updated filter information and the addition of said rules at a policy and charging enforcement function is triggered whilst maintaining said existing filter information. After a predefined delay, a request is sent from said application function to said policy and charging rules function with previously provided updated filter information and an indication that only this filter information shall remain active. Said existing filter information is deleted at the policy and charging enforcement function, and corresponding bearers also deleted.

A particular use case of the above method is where the IP flow being controlled is an IP media flow between two or more user entities, UEs.

### Brief Description of the Drawing

Figure 1 illustrates schematically components of an IP Multimedia Subsystem overlayed on a packet switched access network;
Figure 2 illustrates schematically a Policy and Charging Control Architecture;
Figure 3 illustrates signalling associated with a procedure for installing and removing PCC rules from a PCEF;
Figure 4 illustrates schematically a PCRF according to an embodiment of the present invention;
Figure 5 illustrates schematically an AF according to an embodiment of the present invention;
Figure 6 illustrates schematically a PCEF according to an embodiment of the present invention;
Figure 7 is a flow diagram illustrating two alternative procedures for applying Policy and Charging Control.
Figures 8A and 8B illustrate signalling associated with an alternative procedure for installing and removing PCC rules from a PCEF;
Figure 9 illustrates schematically an AF for use with the procedure illustrated in Figure 8;
Figure 10 illustrates schematically a PCRF for use with the procedure illustrated in Figure 8; and
Figure 11 is a flow diagram further illustrating the procedure of Figure 8.

### Detailed Description

Considering once again the PCC architecture of Figure 2, it has already been noted that current specifications require the immediate activation, replacement and removal of filter description information at the PCEF once the AF delivers modified Service Information to the PCRF. That is, if the AF modifies Service Information to provide "new" filter information, the "existing" filter information installed in the PCEF is replaced immediately with the new filter information. IP packets received by the PCEF that match the "existing" filter information will be discarded. Similarly, if the AF modifies Service Information to delete "existing" filter information, this information will be removed from the corresponding PCC rules (the PCC rule itself may be removed) immediately. IP packets matching "existing" filter information will be discarded with immediate effect.

Scenarios are envisaged however in which, upon modification of the Service Information by the AF to replace or to remove "existing" filter information, it is undesirable to delete the existing filter information immediately. For example, in the case of TCP-negotiated media over SDP as defined in IETF RFC 4145, the endpoints may negotiate the reestablishment of an "existing" TCP connection. This may occur during a single SIP session over IMS. It is likely that the new TCP connection is established using different port numbers, so the filter information provided previously to the PCRF must be updated.

It is proposed here to activate the filter information corresponding to the new TCP connection immediately, but at the same time to maintain the existing filter information at least for some time to allow the endpoints to gracefully terminate the existing TCP connection, providing for an enhanced user service. The existing filters remain in place to let the associated TCP packets through until either the UE itself requests the removal of the existing filters (which is possible when UE initiated bearer control mode is used), or until a network-controlled safeguard time period has elapsed (which is used regardless of the bearer control mode between the UE and the PCEF as well as when bearer control procedures are not used at all). The safeguard time is determined by the network and is set to a value that will allow the endpoints to gracefully terminate the "existing" TCP connection. In the case of UE initiated bearer control procedures, the safeguard time sets a limit for the UE to remove the filters itself, thus protecting the network from a potentially fraudulent UE which does not remove the filters.

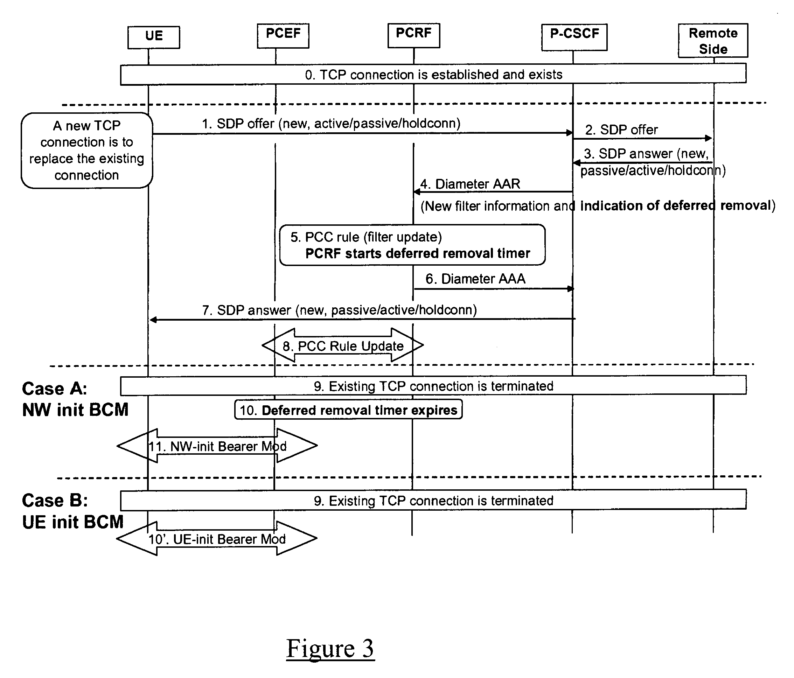

Figure 3 presents an overall description of a method for the deferred removal of existing filter information in the PCEF. This relates by way of example to the reestablishment of an existing TCP connection. In this context, it is assumed that an existing TCP connection has been established between two endpoints (UEs) and for which corresponding filters and PCC rules are active within the IP-CAN (step 0 in Figure 3). The endpoints then negotiate the re-establishment of this TCP connection by exchanging SDP offer and SDP answer messages via P-CSCF of the IMS (step 1-3 and 7). In this case, the AF of the PCC architecture resides in the P-CSCF.

If available (i.e. "new, active/passive" within SDP answer), the P-CSCF provides updated filter information to the PCRF for the establishment of the new TCP connection. It does this using the Diameter AAR message (step 4). Otherwise (i.e. "new, holdconn" within the SDP answer) the P-CSCF requests the removal of existing filter information in order to block the existing TCP connection. The P-CSCF additionally includes a request for deferred removal of existing filter information.

An explicit indication that deferred removal of existing filter information is required may be in the form of a new "Deferred-Removal-Timer-UL/DL" AVP contained within the AAR message. The Deferred-Removal-Timer-UL/DL AVP may be of type Unsigned32, and may indicate the value for the timer, e.g. in seconds or milliseconds. This AVP is only used when the AF (P-CSCF) requests replacement of existing filter information with new information (i.e. updated filter information is provided within the Flow-Description AVP) or when the AF requests removal of existing filter information without providing new information (i.e. Flow-Status AVP is set to the value 'REMOVED'). If the AF does not include this AVP, the existing filter information (if available) is removed immediately (i.e. the default value for this timer is zero if this AVP is not provided by the AF). If the AF includes this AVP but existing filter information is not available for the corresponding flows, the PCRF ignores the AVP.

It is noted that, as the timers for deferred removal of uplink (UL) and downlink (DL) filter information may be different, two separate AVPs may be defined and included within the AAR sent from the P-CSCF to the PCRF.

The Deferred-Removal-Timer-UL/DL may be included at Media Component level as illustrated in Table 1 below, or at the Media Subcomponent level as illustrated in Table 2.

Upon receipt of the AAR message from the P-CSCF, the PCRF starts the deferred-removal timer (step 5) and responds to the P-CSCF with a Diameter AAA message (step 6). If new filter information was provided in the request, the PCRF creates PCC rules for the new filter information and installs these into the PCEF (step 8). To generate the new rules, the PCRF may contact the SPR (see Figure 2).

Rather than implement the delay timer at the PCRF, the PCRF may request that the PCEF initiate the timer and remove the PCC rules for the existing filter information upon expiry of the timer. This approach may indeed be optimal where a single message from the PCRF is used to install both new rules and trigger the delayed removal of the existing rules.

IP flows matching the existing filter information will be accepted at the PCEF prior to expiry of the timer as the corresponding PCC rules will not yet have been removed from the PCEF. This provides a transition period during which the end points can gracefully terminate the existing TCP connection (step 9). When the deferred removal timer expires (step 10), the IP-CAN will remove the corresponding PCC rules for the existing filter. The corresponding bearer resources will be also be released (step 11) and IP flows matching the existing filters will no longer be accepted.

It is possible that the UE may itself request the removal of existing filter information after graceful termination of the existing TCP connection (step 10' replacing steps 10 and 11), in which case the IP-CAN will remove the existing filter information and corresponding PCC rule(s) (step 10') and will stop the deferred removal timer (running in either the PCRF or PCEF) (step 11').

An alternative to including an explicit deferral request in the AAR is to configure the IP-CAN to trigger the deferred removal of existing filter information based on certain service description characteristics as currently provided by the AF. For example, the PCRF may decide to trigger the deferred removal of existing filter information based on a protocol defined within the filter information itself (e.g. proto = TCP). This option does not impact on the current definition of the Rx reference point although the Deferred-Removal-Timer is configured locally at the PCRF.

Considering this alternative approach in more detail, when the AF requests the removal of existing filter information, the PCRF will start the Deferred-Removal-Timer-UL/DL. The PCC rule(s) for the IP flows matching the existing filter information are kept active whilst the timer is running (i.e. corresponding IP flows, e.g. over an existing TCP connection, will be accepted). If the AF provided new filter information to replace the existing information, new filters will be installed and activated at the PCEF over the Gx reference point, either within the same PCC rule(s) defining the existing filters or within a new PCC rule(s).

When the Deferred-Removal-Timer-UL/DL expires, the PCRF proceeds to remove the existing filter information. The PCRF removes the existing filter information from the PCC rules where they were defined (most probably the PCC rule itself will be removed). The corresponding bearer resources will be released and the IP flows matching the existing filter information will no longer be accepted.

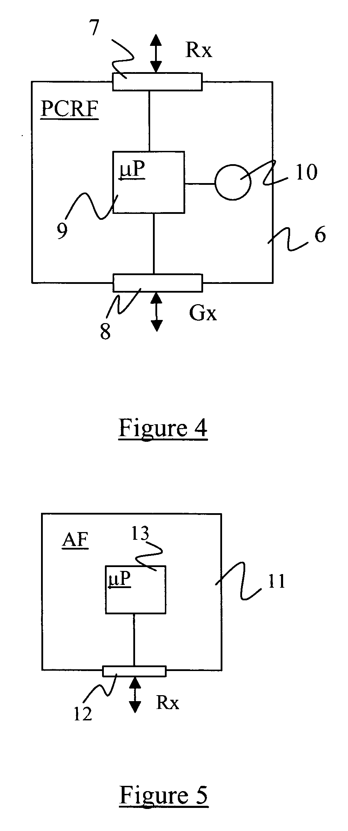

With reference to Figure 4, there is illustrated apparatus 6 for implementing a PCRF in the case where the PCRF implements the delay timer. The apparatus comprises a first interface 7 connected to the Rx reference point, and a second interface 8 connected to the Gx interface. A processor or processors 9 is responsible for receiving and handling Service Information received over the Rx interface, and for sending Policy and Charging Control Information out over the Gx interface. The processor(s) determines based upon explicit indications in the Service Information, or based upon service session characteristics, that a delay is to be implemented. If so, a timer 10 is initiated as described above.

Figure 5 illustrates schematically apparatus 11 for implementing an AF. This apparatus could comprise a P-CSCF of an IMS network. The apparatus 11 comprises an interface 12 coupled to the Rx reference point, and a processor or processors 13 for generating Service Information based upon requirements of IMS subscribers. In particular, the processor(s) may include an explicit request for rule removal delay within the Service Information.

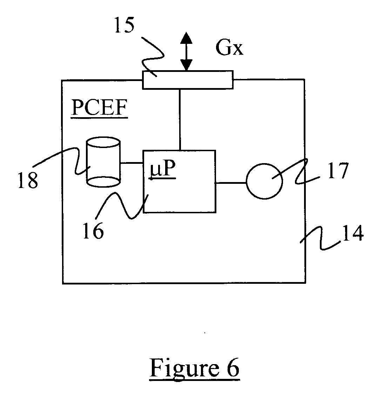

Figure 6 illustrates schematically apparatus 14 for implementing a PCEF in the case where the timer is implemented at the PCEF. The apparatus comprises an interface 15 coupled to the Gx reference point. A processor or processors 16 handles incoming PCC rule related instructions. PCC rules are maintained in a PCC rules database 18. A timer is implemented at entity 17.

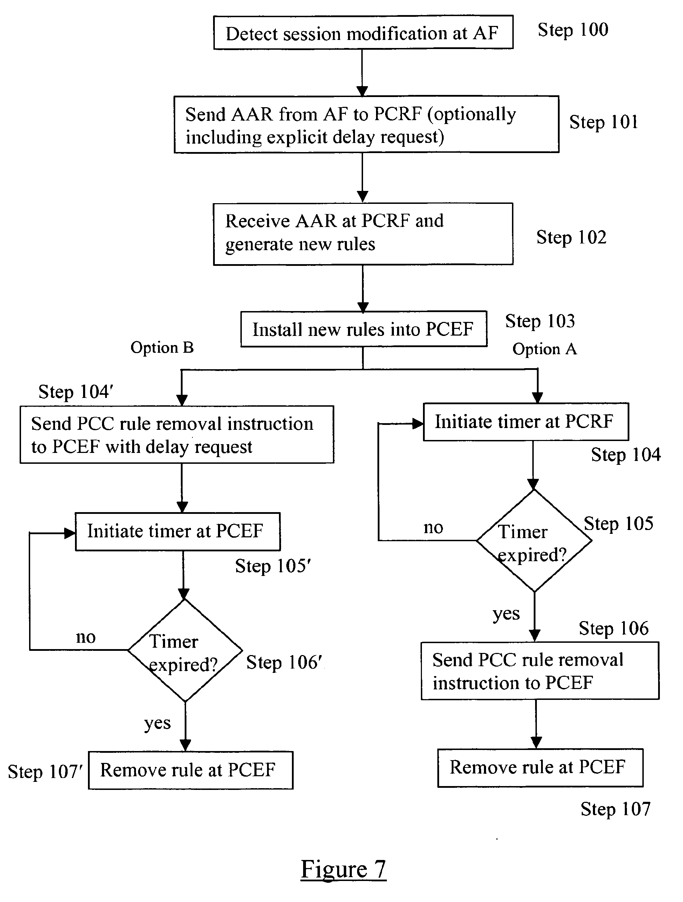

Figure 7 is a flow diagram illustrating two alternative PCC mechanisms as described above. Common to both mechanisms are the steps of detecting session modification at the AF (step 100), sending modified Service Information from the AF to the PCRF (step 101), receiving the modified Service Information at the PCRF and generating any new Policy and Charging Control Information (step 102), and immediately installing the new PCC information at the PCEF (step 103). Option A is followed when the timer is implemented at the PCRF (step 104). The timer is checked (step 105), and upon expiry the PCRF sends an IP filter removal instruction to the PCEF (step 106). The PCEF responds by removing the appropriate IP filter(s) from its rules database (step 107). Option B is followed when the delay timer is implemented at the PCEF. The PCRF immediately sends the IP filter removal instruction to the PCEF (step 104'), together with the new rule, i.e. steps 103 and 104' may be implemented using the same message of the Gx reference point. The PCEF initiates a delay timer with appropriate delay value (step 105'), The timer is checked (step 106'), and upon expiry the existing IP filters are removed (step 107').

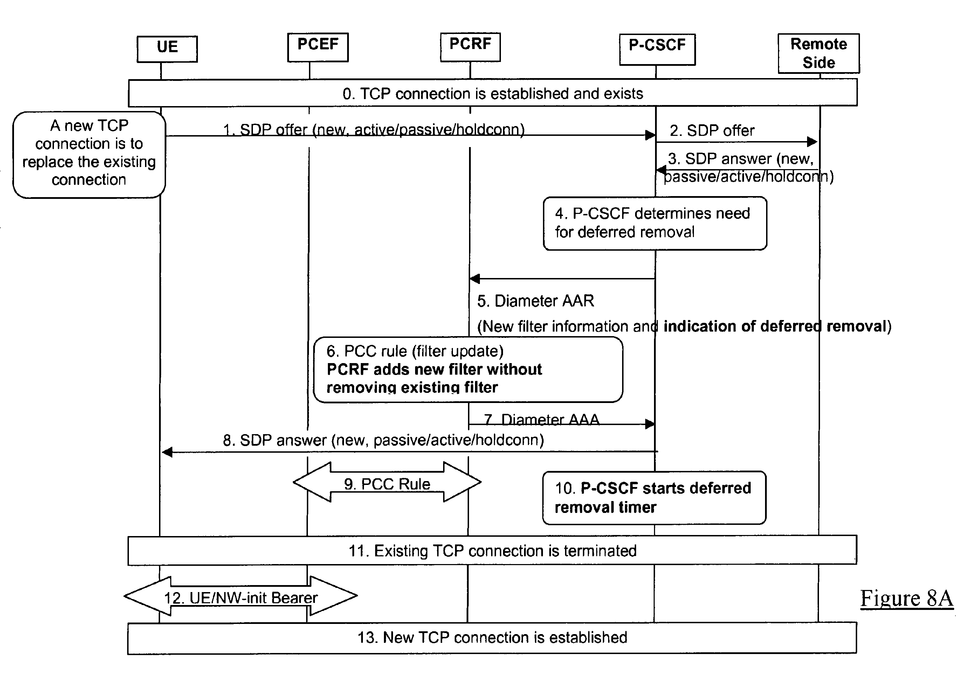

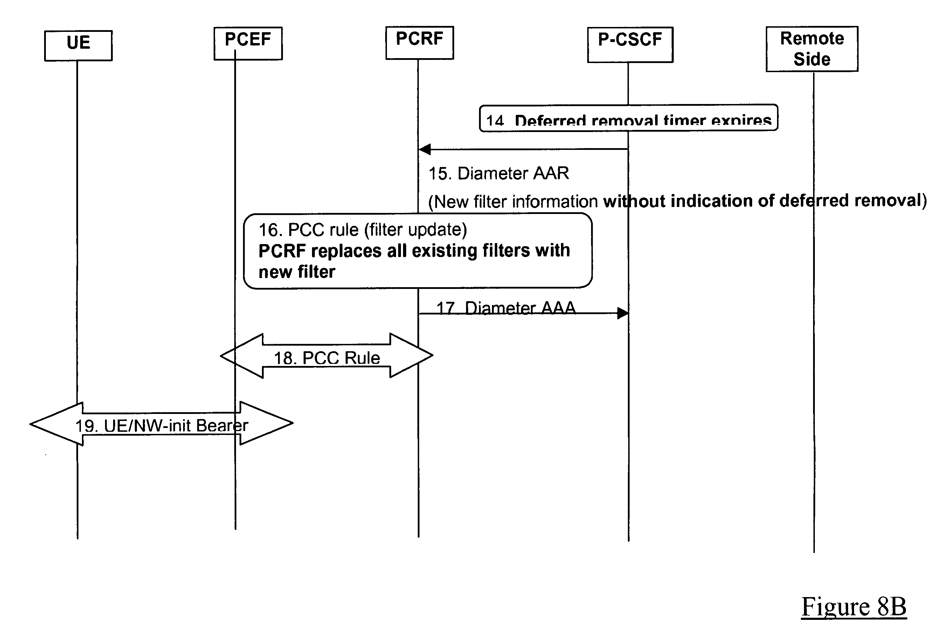

Turning now to the signalling flow illustrated in Figures 8A and 8B, there is illustrated yet another alternative PCC mechanism. Steps common to the flow of Figure 3 will not be described in detail. The main difference lies in the fact that, according to the further alternative procedure, the deferred filter removal timer is implemented at the AF, i.e. P-CSCF. The P-CSCF determines the need to implement the timer at step 4, with the timer actually being initiated at step 10 (or earlier). The P-CSCF must still include within the AAR (step 5) an indication that the existing filters shall not be removed for the time being. This allows the PCRF to install the new filter description information without removing the existing filters at step 6. Upon expiry of the timer at the P-CSCF (step 14), the P-CSCF sends a further AAR to the PCRF, with the filter information that shall be active and with an indication that only this filter information shall now be active. This causes the PCRF to instruct (step 18) the PCEF to remove the corresponding filter information from existing PCC rules. The PCEF makes finally sure that only the filter description information contained in the AAR in step 14 is active and rest of the previously active filter information is removed from the corresponding bearer (Step 19) (if not previously removed by the UE itself).

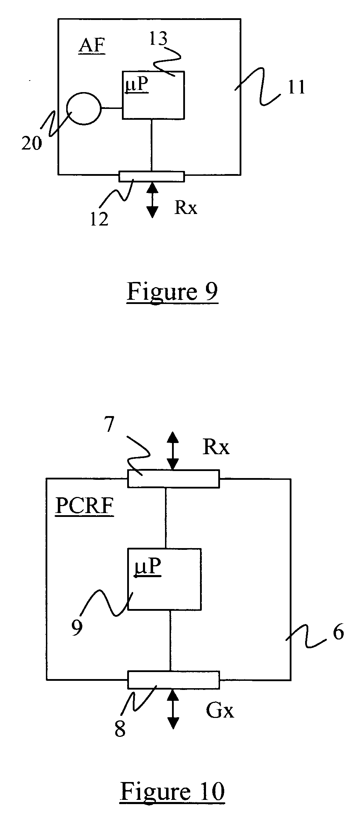

Turning now to Figure 9, this illustrates schematically an AF suitable for use with the alternative procedure of Figure 8. The AF is essentially as described above with reference to Figure 5, but with the addition of a timer 20. Figure 10 illustrates schematically a PCRF for use with the procedure of Figure 9. The PCRF is essentially as described above with reference to Figure 4, but with the timer 10 removed.

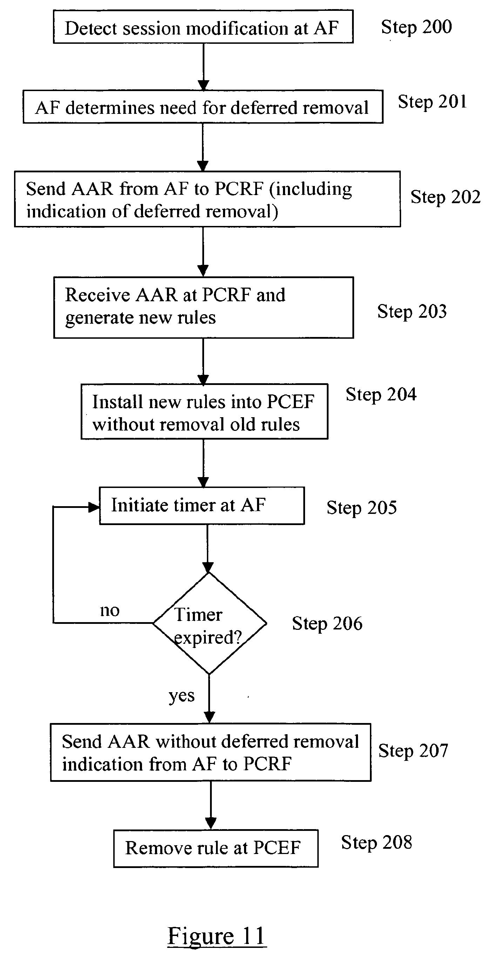

Considering now the flow diagram of Figure 11, this further illustrates the procedure of Figure 8. At step 200, the AF detects session modification and at step 201 identifies a requirement for deferred removal of filters already existing for the session. The AF sends an AAR, step 202, to the PCRF and includes an indication of deferred removal. The PCRF generates, step 203, the new rules and installs these into the PCEF, step 204. At step 205, the AF initiates a deferred removal timer, and monitors the timer at step 206. Upon expiry of the timer, the AF sends a further AAR with updated session information and which does not include the deferred removal request, step 207. At step 208, the PCRF deletes the existing rules from the PCEF.

**Table 1**

| Media-Component-Description ::= < AVP Header: 517 > | |
|---|---|
| | { Media-Component-Number } ; Ordinal number of the media comp. |
| | * [ Media-Sub-Component ] ; Set of flows for one flow id |
| | [ AF-Application-Identifier ] |
| | [ Media-Type ] |
| | [ Max-Requested-Bandwidth-UL ] |
| | [ Max-Requested-Bandwidth-DL ] |
| | [ Flow-Status ] |
| | [Deferred-Removal-Timer-UL] |
| | [Deferred-Removal-Timer-DL] |
| | [ Reservation-priority ] |
| | [ RS-Bandwidth ] |
| | [ RR-Bandwidth ] |
| | * [ Codec-Data ] |

**Table 2**

| Media-Sub-Component ::= < AVP Header: 519 > | |
|---|---|
| | { Flow-Number } ; Ordinal number of the IP flow |
| | 0*2 [ Flow-Description ] ; UL and/or DL |
| | [Deferred-Removal-Timer-UL] |
| | [Deferred-Removal-Timer-DL] |
| | [ Flow-Status ] |
| | [ Flow-Usage ] |
| | [ Max-Requested-Bandwidth-UL ] |
| | [ Max-Requested-Bandwidth-DL ] |
| | [ AVP ] |

## Claims

1. Apparatus for generating policy and charging rules to control IP flows across a packet switched network and comprising:
a first interface (7) for coupling to an application function;
a second interface (8) for coupling to a policy and charging enforcement function implemented at a node through which said IP flows pass; and
a processor or processors (9) configured to receive service information at said first interface, and, via said second interface to trigger the removal of one or more pre-existing policy and charging rules at the policy and charging enforcement function following a predefined delay,
**characterised in that** the processor or processors are further configured to receive at said first interface an explicit request to implement said delay.

2. Apparatus according to claim 1, wherein said processor or processors (9) is/are configured to initiate a timer (10) upon receipt of said service information and, upon expiry of the timer, to send an instruction to said policy and charging enforcement function via said second interface (8) to delete said pre-existing policy and charging rule(s).

3. Apparatus according to claim 1, wherein said processor or processor (9) is/are configured to send to said policy and charging enforcement function, via said second interface (8), an instruction to delete said pre-existing policy and charging rule(s) after a delay specified in the instruction.

4. Apparatus according to any one of the preceding claims, wherein said processor or processors (9) is/are configured to receive, via said first interface (7), a delay value.

5. Apparatus according to any one of claims 1 to 3, wherein said processor or processors (9) is/are configured to implement said delay based upon service description characteristics received over said first interface (7).

6. Apparatus according to any one of the preceding claims, wherein said first interface (7) is an interface to an Rx reference point. and said second interface (8) is an interface to a Gx reference point.

7. Apparatus according to claim 6, said processor or processors (9) being configured to receive said service information within a Session Description Protocol offer.

8. Apparatus according to claim 1, said processor or processors (9) being configured to (a) install a new set of policy and charging rules into said policy and charging enforcement function in addition to a pre-existing set and (b), following said predefined delay, to remove said pre-existing set from said policy and charging enforcement function.

9. Apparatus according to claim 8, said processor or processors (9) being configured to perform steps (a) and (b) in response to respective requests received from said application function.

10. Apparatus for implementing an application function to establish and control IP flows across a packet switched network, the apparatus comprising:
an interface (12) for coupling to a policy and charging rules function; and
a processor or processors (13) configured to determine service information relating to an IP flow or flows and to send said service information via said interface,
**characterised in that** the processor or processors (13) is/are further configured to send a request for delayed deletion of a policy and charging control rule or rules relating to said flow(s) together with said service information.

11. Apparatus according to claim 10. said processor or processors (13) being configured to send a delay value together with said service information and said explicit request.

12. Apparatus according to 10 or 11, wherein said interface (12) is an interface to an Rx reference point.

13. Apparatus according to any one of claims 10 to 12, the apparatus being configured to operate as a Proxy Call Session Control Function within an IP Multimedia Subsystem.

14. Apparatus for implementing an application function to establish and control IP flows across a packet switched network, the apparatus comprising:
an interface (12) for coupling to a policy and charging rules function; and
a processor or processors (13) configured to determine service information relating to an IP flow or flows and to send said service information via said interface,
**characterised in that** the processor or processors (13) is/are further configured to send, together with said service information, a request to maintain an existing policy and charging control rule or rules relating to said flow(s), and, after a predefined delay, to send a further request to delete said existing policy and
charging control rule or rules.

15. A method of controlling IP flows through a packet switched access network, the method comprising the steps of:
sending updated service information from an application function to a policy and charging rules function, together with an explicit request to implement removal of policy and charging rules after a delay;
at the policy and charging rules function, determining that a policy and charging rule or rules must be removed from a policy and charging enforcement function responsible for an IP flow or flows associated with the session; and
triggering the removal of said policy and charging rule or rules after a predefined delay.

16. A method according to claim 15, wherein said application function is implemented at a Proxy Call Session Control Function of an IP Multimedia Subsystem, and said policy and charging enforcement function is implemented at a GPRS Gateway Support Node.

17. A method according to claim 15 or 16, said policy and charging rules function being arranged to make separate determinations for rule(s) removal for uplink and downlink IP flows.

18. A method of controlling IP flows through a packet switched access network, the method comprising by the steps of:
sending updated filter information from an application function to a policy and charging rules function together with a request to maintain existing filter information relating to said IP flows;
at said policy and charging rules function, determining a new policy and charging rule(s) using said updated filter information and triggering the addition of said rules at a policy and charging enforcement function whilst maintaining said existing filter information;
after a predefined delay, sending a request from said application function to said policy and charging rules function with previously provided updated filter information and an indication that only this filter information shall remain active; and
deleting said existing filter information at the policy and charging enforcement function, and deleting corresponding bearers.

## Patentansprüche

1. Vorrichtung zum Erzeugen von Richtlinien- und Gebührenerhebungsregeln, um IP-Flüsse über ein paketvermitteltes Netzwerk zu steuern, umfassend:
eine erste Schnittstelle (7) zum Koppeln an eine Anwendungsfunktion;
eine zweite Schnittstelle (8) zum Koppeln an eine Richtlinien- und Gebührenerhebungsdurchsetzungsfunktion, die in einem Knoten implementiert ist, den die IP-Flüsse durchlaufen; und
einen Prozessor oder Prozessoren (9), dafür konfiguriert, Dienstinformation an der ersten Schnittstelle zu empfangen und über die zweite Schnittstelle die Löschung einer oder mehrerer vorher bestehender Richtlinien- und Gebührenerhebungsregeln in der Richtlinien- und Gebührenerhebungsdurchsetzungsfunktion nach einer vordefinierten Verzögerung zu veranlassen,
**dadurch gekennzeichnet, dass** der Prozessor oder die Prozessoren ferner dafür konfiguriert sind, an der ersten Schnittstelle eine explizite Anforderung, die Verzögerung zu implementieren, zu empfangen.

2. Vorrichtung nach Anspruch 1, wobei der Prozessor oder die Prozessoren (9) dafür konfiguriert ist/sind, bei Empfang der Dienstinformation einen Zeitgeber (10) auszulösen und bei Ablauf des Zeitgebers über die zweite Schnittstelle (8) eine Anweisung an die Richtlinien- und Gebührenerhebungsdurchsetzungsfunktion zu senden, die vorher bestehende(n) Richtlinien- und Gebührenerhebungsregel(n) zu löschen.

3. Vorrichtung nach Anspruch 1, wobei der Prozessor oder die Prozessoren (9) dafür konfiguriert ist/sind, über die zweite Schnittstelle (8) eine Anweisung an die Richtlinienund Gebührenerhebungsdurchsetzungsfunktion zu senden, die vorher bestehende(n) Richtlinien- und Gebührenerhebungsregel(n) nach einer in der Anweisung festgelegten Verzögerung zu löschen.

4. Vorrichtung nach einem der vorhergehenden Ansprüche, wobei der Prozessor oder die Prozessoren (9) dafür konfiguriert ist/sind, über die erste Schnittstelle (7) einen Verzögerungswert zu empfangen.

5. Vorrichtung nach einem der Ansprüche 1 bis 3, wobei der Prozessor oder die Prozessoren (9) dafür konfiguriert ist/sind, die Verzögerung auf der Grundlage von über die erste Schnittstelle (7) empfangenen Dienstbeschreibungsmerkmalen zu implementieren.

6. Vorrichtung nach einem der vorhergehenden Ansprüche, wobei die erste Schnittstelle (7) eine Schnittstelle zu einem Rx-Referenzpunkt ist und die zweite Schnittstelle (8) eine Schnittstelle zu einem Gx-Referenzpunkt ist.

7. Vorrichtung nach Anspruch 6, wobei der Prozessor oder die Prozessoren (9) dafür konfiguriert ist/sind, die Dienstinformation innerhalb eines Dienstbeschreibungsprotokoll-Angebots zu empfangen.

8. Vorrichtung nach Anspruch 1, wobei der Prozessor oder die Prozessoren (9) dafür konfiguriert ist/sind, (a) eine neue Menge von Richtlinien- und Gebührenerhebungsregeln zusätzlich zu einer bereits bestehenden Menge in der Richtlinien- und Gebührenerhebungsdurchsetzungsfunktion zu installieren und (b) nach der vordefinierten Verzögerung die bereits bestehende Menge aus der Richtlinien- und Gebührenerhebungsdurchsetzungsfunktion zu entfernen.

9. Vorrichtung nach Anspruch 8, wobei der Prozessor oder die Prozessoren (9) dafür konfiguriert ist/sind, die Schritte (a) und (b) als Antwort auf jeweilige von der Anwendungsfunktion empfangene Anweisungen durchzuführen.

10. Vorrichtung zum Implementieren einer Anwendungsfunktion, um IP-Flüsse über ein paketvermitteltes Netzwerk einzurichten und zu steuern, wobei die Vorrichtung umfasst:
eine Schnittstelle (12) zum Koppeln an eine Richtlinien- und Gebührenerhebungsregelfunktion; und
einen Prozessor oder Prozessoren (13), dafür konfiguriert, Dienstinformation, die einen IP-Fluss oder -Flüsse betrifft, zu bestimmen und die Dienstinformation über die Schnittstelle zu senden,
**dadurch gekennzeichnet, dass** der Prozessor oder die Prozessoren (13) ferner dafür konfiguriert ist/sind, eine Anforderung zur verzögerten Löschung einer Richtlinien- und Gebührenerhebungssteuerungsregel oder von -regeln, die den Fluss bzw. die Flüsse betrifft bzw. betreffen, zusammen mit der Dienstinformation zu senden.

11. Vorrichtung nach Anspruch 10, wobei der Prozessor oder die Prozessoren (13) dafür konfiguriert ist/sind, einen Verzögerungswert zusammen mit der Dienstinformation und der expliziten Anforderung zu senden.

12. Vorrichtung nach Anspruch 10 oder 11, wobei die Schnittstelle (12) eine Schnittstelle zu einem Rx-Referenzpunkt ist.

13. Vorrichtung nach einem der Ansprüche 10 bis 12, wobei die Vorrichtung dafür konfiguriert ist, als eine Proxy-Rufsitzungssteuerungsfunktion innerhalb eines IP-Multimediateilsystems zu arbeiten.

14. Vorrichtung zum Implementieren einer Anwendungsfunktion, um IP-Flüsse über ein paketvermitteltes Netzwerk einzurichten und zu steuern, wobei die Vorrichtung umfasst:
eine Schnittstelle (12) zum Koppeln an eine Richtlinien- und Gebührenerhebungsregelfunktion; und
einen Prozessor oder Prozessoren (13), dafür konfiguriert, Dienstinformation, die einen IP-Fluss oder -Flüsse betrifft, zu bestimmen und die Dienstinformation über die Schnittstelle zu senden,
**dadurch gekennzeichnet, dass** der Prozessor oder die Prozessoren (13) ferner dafür konfiguriert ist/sind, zusammen mit der Dienstinformation eine Anforderung zu senden, eine bestehende Richtlinien- und Gebührenerhebungssteuerungsregel oder -regeln, die den Fluss bzw. die Flüsse betrifft bzw. betreffen, zu verwalten, und nach einer vordefinierten Verzögerung eine weitere Anweisung zu senden, die bestehende Richtlinien- und Gebührenerhebungssteuerungsregel oder -regeln zu löschen.

15. Verfahren zum Steuern von IP-Flüssen durch ein paketvermitteltes Netzwerk, wobei das Verfahren die folgenden Schritte umfasst:
Senden aktualisierter Dienstinformation von einer Anwendungsfunktion an eine Richtlinien- und Gebührenerhebungsregelfunktion, zusammen mit einer expliziten Anforderung, die Entfernung von Richtlinien- und Gebührenerhebungsregeln nach einer Verzögerung zu implementieren;
in der Richtlinien- und Gebührenerhebungsregelfunktion erfolgendes Bestimmen, dass eine Richtlinien- und Gebührenerhebungsregel oder -regeln aus einer Richtlinienund Gebührenerhebungsdurchsetzungsfunktion, die für einen der Sitzung zugeordneten IP-Fluss oder -Flüsse zuständig ist, entfernt werden muss bzw. müssen; und
Veranlassen der Entfernung der Richtlinien- und Gebührenerhebungsregel oder -regeln nach einer vordefinierten Verzögerung.

16. Verfahren nach Anspruch 15, wobei die Anwendungsfunktion in einer Proxy-Rufsitzungssteuerungsfunktion eines IP-Multimediateilsystems implementiert ist und die Richtlinien- und Gebührenerhebungsdurchsetzungsfunktion in einem GPRS-Gatewayunterstützungsknoten implementiert ist.

17. Verfahren nach Anspruch 15 oder 16, wobei die Richtlinien- und Gebührenerhebungsregelfunktion dafür eingerichtet ist, getrennte Bestimmungen zur Regelentfernung für Aufwärtsstrecken- und Abwärtsstrecken-IP-Flüsse vorzunehmen.

18. Verfahren zum Steuern von IP-Flüssen durch ein paketvermitteltes Netzwerk, wobei das Verfahren durch die folgenden Schritte gekennzeichnet ist:
Senden aktualisierter Filterinformation von einer Anwendungsfunktion an eine Richtlinien- und Gebührenerhebungsregelfunktion zusammen mit einer Anforderung, bestehende Filterinformation, welche die IP-Flüsse betrifft, zu verwalten;
in der Richtlinien- und Gebührenerhebungsregelfunktion erfolgendes Bestimmen einer neuen Richtlinien- und Gebührenerhebungsregel bzw. -regeln unter Verwendung der aktualisierten Filterinformation und Veranlassen der Hinzufügung der Regeln in einer Richtlinien- und Gebührenerhebungsdurchsetzungsfunktion, während die bestehende Filterinformation beibehalten wird;
nach einer vordefinierten Verzögerung erfolgendes Senden einer Anforderung von der Anwendungsfunktion an die Richtlinien- und Gebührenerhebungsregelfunktion mit vorher bereitgestellter aktualisierter Filterinformation und einer Angabe, dass nur diese Filterinformation aktiv bleiben soll; und
Löschen der bestehenden Filterinformation in der Richtlinien- und Gebührenerhebungsdurchsetzungsfunktion und Löschen zugehöriger Träger.

## Revendications

1. Dispositif destiné à générer des règles de politique et de facturation en vue de commander des flux IP à travers un réseau à commutation de paquets, le dispositif comprenant :
une première interface (7) destinée à être couplée à une fonction d'application ;
une seconde interface (8) destinée à être couplée à une fonction d'application de politique et de facturation mise en oeuvre au niveau d'un noeud par lequel transite ledit flux IP ; et
un processeur ou des processeurs (9) configuré(s) de manière à recevoir des informations de service au niveau de ladite première interface, et, via ladite seconde interface, de manière à déclencher la suppression d'une ou plusieurs règles de politique et de facturation préexistantes au niveau de la fonction d'application de politique et de facturation à la suite d'un retard prédéfini ;
**caractérisé en ce que** le ou les processeurs sont en outre configurés de manière à recevoir au niveau de ladite première interface une demande explicite visant à mettre en oeuvre ledit retard.

2. Dispositif selon la revendication 1, dans lequel ledit processeur ou lesdits processeurs (9) est/sont configuré(s) de manière à initier un temporisateur (10) lors de la réception desdites informations de service et, à l'expiration du temporisateur, de manière à envoyer une instruction à ladite fonction d'application de politique et de facturation via ladite seconde interface (8) en vue de supprimer ladite règle ou lesdites règles de politique et de facturation préexistantes.

3. Dispositif selon la revendication 1, dans lequel ledit processeur ou lesdits processeurs (9) est/sont configurés de manière à envoyer à ladite fonction d'application de politique et de facturation, via ladite seconde interface (8), une instruction visant à supprimer ladite règle ou lesdites règles de politique et de facturation préexistantes à l'issue d'un retard spécifié dans l'instruction.

4. Dispositif selon l'une quelconque des revendications précédentes, dans lequel ledit processeur ou lesdits processeurs (9) est/sont configuré(s) de manière à recevoir, via ladite première interface (7), une valeur de retard.

5. Dispositif selon l'une quelconque des revendications 1 à 3, dans lequel ledit processeur ou lesdits processeurs (9) est/sont configuré(s) de manière à mettre en oeuvre ledit retard sur la base de caractéristiques de description de service reçues sur ladite première interface (7).

6. Dispositif selon l'une quelconque des revendications précédentes, dans lequel ladite première interface (7) est une interface vers un point de référence Rx et ladite seconde interface (8) est une interface vers un point de référence Gx.

7. Dispositif selon la revendication 6, dans lequel ledit processeur ou lesdits processeurs (9) est/sont configuré(s) de manière à recevoir lesdites informations de service dans une offre de protocole de description de service.

8. Dispositif selon la revendication 1, dans lequel ledit processeur ou lesdits processeurs (9) est/sont configuré(s) de manière à : (a) installer un nouvel ensemble de règles de politique et de facturation dans ladite fonction d'application de politique et de facturation outre un ensemble préexistant et (b), suite audit retard prédéfini, à supprimer ledit ensemble préexistant de ladite fonction d'application de politique et de facturation.

9. Dispositif selon la revendication 8, dans lequel ledit processeur ou lesdits processeurs (9) est/sont configuré(s) de manière à mettre en oeuvre les étapes (a) et (b) en réponse à des demandes respectives reçues à partir de ladite fonction d'application.

10. Dispositif destiné à mettre en oeuvre une fonction d'application en vue d'établir et de commander un flux IP à travers un réseau à commutation de paquets, le dispositif comprenant :
une interface (12) destinée à être couplée à une fonction de règles de politique et de facturation ; et
un processeur ou des processeurs (13) configuré(s) de manière à déterminer des informations de service connexes à un flux ou des flux IP et à envoyer lesdites informations de service via ladite interface ;
**caractérisé en ce que** le processeur ou les processeurs (13) est/sont en outre configuré(s) de manière à envoyer une demande de suppression retardée d'une ou des règles de commande de facturation et de politique connexe(s) audit ou auxdits flux avec lesdites informations de service.

11. Dispositif selon la revendication 10, dans lequel ledit processeur ou lesdits processeurs (13) est/sont configuré(s) de manière à envoyer une valeur de retard avec lesdites informations de service et ladite demande explicite.

12. Dispositif selon l'une quelconque des revendications 10 ou 11, dans lequel ladite interface (12) est une interface vers un point de référence Rx.

13. Dispositif selon l'une quelconque des revendications 10 à 12, dans lequel ledit dispositif est configuré de manière à faire office de fonction de serveur mandataire de commande de session d'appel au sein d'un sous-système multimédia IP.

14. Dispositif destiné à mettre en oeuvre une fonction d'application en vue d'établir et de commander des flux IP à travers un réseau à commutation de paquets, le dispositif comprenant :
une interface (12) destinée à être couplée à une fonction de règles de politique et de facturation ; et
un processeur ou des processeurs (13) configuré(s) de manière à déterminer des informations de service connexes à un flux ou des flux IP et à envoyer lesdites informations de service via ladite interface ;
**caractérisé en ce que** le processeur ou les processeurs (13) est/sont en outre configuré(s) de manière à envoyer, avec lesdites informations de service, une demande visant à maintenir une règle ou des règles de commande de facturation et de politique existante(s) connexe(s) audit flux ou auxdits flux, et, à l'issue d'un retard prédéfini, à envoyer une demande supplémentaire visant à supprimer ladite une règle ou lesdites règles de commande de facturation et de politique existante(s).

15. Procédé destiné à commander des flux IP à travers un réseau d'accès à commutation de paquets, le procédé comportant les étapes ci-dessous consistant à :
envoyer des informations de service mises à jour depuis une fonction d'application jusqu'à une fonction de règles de politique et de facturation, avec une demande explicite visant à mettre en oeuvre une suppression de règles de politique et de facturation à l'issue d'un retard ;
au niveau de la fonction de règles de politique et de facturation, déterminer qu'une règle ou des règles de politique et de facturation doit/doivent être supprimée(s) d'une fonction d'application de politique et de facturation en charge d'un flux ou de flux IP associé(s) à la session ; et
déclencher la suppression de ladite règle ou desdites règles de politique et de facturation à l'issue d'un retard prédéfini.

16. Procédé selon la revendication 15, dans lequel ladite fonction d'application est mise en oeuvre au niveau d'une fonction de serveur mandataire de commande de session d'appel d'un sous-système multimédia IP, et dans lequel ladite fonction d'application de politique et de facturation est mise en oeuvre au niveau d'un noeud de service GPRS de transit.

17. Procédé selon la revendication 15 ou 16, dans lequel ladite fonction de règles de politique et de facturation est agencée de manière à mettre en oeuvre des déterminations distinctes pour la suppression de règle(s) des flux IP en liaison montante et en liaison descendante.

18. Procédé destiné à commander des flux IP à travers un réseau d'accès à commutation de paquets, le procédé comportant les étapes ci-dessous consistant à :
envoyer des informations de filtre mises à jour, d'une fonction d'application à une fonction de règles de politique et de facturation, avec une demande visant à maintenir des informations de filtre existantes connexes auxdits flux IP ;
au niveau de ladite fonction de règles de politique et de facturation, déterminer une nouvelle ou des nouvelles règles de politique et de facturation en faisant appel auxdites informations de filtre mises à jour, et déclencher l'ajout desdites règles au niveau d'une fonction d'application de politique et de facturation tout en conservant lesdites informations de filtre existantes ;
à l'issue d'un retard prédéfini, envoyer une demande, de ladite fonction d'application à ladite fonction de règles de politique et de facturation, avec des informations de filtre mises à jour précédemment fournies et une indication selon laquelle seules ces informations de filtre doivent rester actives ; et
supprimer lesdites informations de filtre existantes au niveau de la fonction d'application de politique et de facturation, et supprimer des porteuses correspondantes.
